# EUROPÄISCHE PATENTANMELDUNG

(11) **EP 2 733 404 A2**
(43) Veröffentlichungstag der Anmeldung: **21.05.2014**
(21) Anmeldenummer: 13192430.0
(22) Anmeldetag: 12.11.2013
(51) Int. Cl.: F16L 41/14

(54) **Anschlusssystem mit einem Innenrohr mit Zentrierelementen**

(30) Priorität: 14.11.2012 DE 202012104388 U
(71) Anmelder: REHAU AG + Co, 95111 Rehau (DE)
(72) Erfinder: Sieber, Jürgen, 91074 Herzogenaurach (DE)

(57) **Zusammenfassung**

Die vorliegende Erfindung betrifft ein Anschlusssystem (10) zum Anschließen eines Rohres an ein Hauptrohr (12), wobei das Anschlusssystem (10) zu diesem Zweck mit dem Hauptrohr (12) verbindbar ist, mit einem elastisch verformbaren Innenrohr (16), wobei das Innenrohr (16) einen Endabschnitt mit wenigstens einer abgeknickten Lasche (18) aufweist und durch Zusammendrücken mit der Lasche (18) voran durch eine Abzweigöffnung (14) des Hauptrohres (12) in dieses teilweise einschiebbar ist, und wobei eine äußere Anlagefläche (20) der Lasche in einem Verbindungszustand, in dem das Anschlusssystem (10) mit dem Hauptrohr (12) verbunden ist, wenigstens teilweise eine Hauptrohr-Innenfläche (22), die an die Abzweigöffnung (14) angrenzt und diese umgibt, kontaktiert, einem Haltering (24) und einem Dichtelement (26), wobei der Haltering (24) und das Dichtelement (26) im Verbindungszustand auf das Innenrohr (16) aufgeschoben sind, und wobei das Dichtelement (26) im Verbindungszustand mit einer an einer Außenfläche (28) des Hauptrohres (12) anliegenden Kontaktfläche (30) die Abzweigöffnung (14) umschließt, einem Abzweigelement, das für eine Verbindung mit dem Rohr vorgesehen ist, wobei das Abzweigelement im Verbindungszustand auf das Innenrohr (16) geschraubt ist und dabei den Haltering (24) gegen das Dichtelement (26) drückt, das sich dadurch auszeichnet, dass am Innenrohr (16) Zentrierelemente (82) ausgebildet sind, die in einem Verbindungszustand, in dem das Anschlusssystem (10) mit dem Hauptrohr (12) verbunden ist, wenigstens teilweise eine Hauptrohr-Abzweigöffnungsfläche (84) kontaktieren.

## Beschreibung

Die Erfindung betrifft ein Anschlusssystem mit einem Innenrohr mit Zentrierelementen zum Anschließen eines Rohres an ein Hauptrohr.
Weiterhin betrifft die Erfindung ein Fluidleitsystem.

Aus dem Stand der Technik bekannte Anschlusssysteme zum Anschließen eines Rohres an ein Hauptrohr sind aufwändig gestaltet, um die Dichtheit der Verbindung zwischen Hauptrohr und angeschlossenem Rohr sicherzustellen.

Bei vielen Systemen wird dazu ein elastisch verformbares Innenrohr durch eine Abzweigöffnung des Hauptrohres in dieses teilweise eingeschoben und dann mit weiteren Elementen zum Anschlusssystem verbunden.

Diese Anschlusssysteme weisen den Nachteil auf, dass das Innenrohr üblicherweise einen kleineren Durchmesser als die Abzweigöffnung des Hauptrohres aufweist.

Wenn es dann bei der Montage oder nach der Herstellung des fertigen Anschlusssystems zu Scherlasten kommt, die in das Anschlusssystem eingeleitet werden, kann es dazu kommen, dass sich das Innenrohr in der Abzweigöffnung verschiebt, so dass dadurch die Dichtung verlagert bzw. ungleichmäßig belastet wird.
In Extremfällen kann es sogar dazu kommen, dass die Dichtung teilweise weggerollt wird und ihre Funktion nicht mehr erfüllen kann.

Unerwünschte Undichtigkeiten des Anschlusssystems sind die Folge.

Hier setzt die Erfindung an, deren Aufgabe darin besteht, ein Anschlusssystem zum Anschließen eines Rohres an ein Hauptrohr anzugeben, das im Vergleich zu bekannten Lösungen eine verbesserte Dichtigkeit insbesondere bei auftretenden Scherlasten aufweist.

Diese Aufgabe wird erfindungsgemäß mit einem Anschlusssystem zum Anschließen eines Rohres an ein Hauptrohr mit den Merkmalen des Anspruchs 1 gelöst.

Erfindungsgemäß ist dazu vorgesehen, dass ein Anschlusssystem zum Anschließen eines Rohres an ein Hauptrohr bereitgestellt wird, wobei das Anschlusssystem zu diesem Zweck mit dem Hauptrohr verbindbar ist, wobei das Anschlusssystem ein elastisch verformbares Innenrohr aufweist, wobei das Innenrohr einen Endabschnitt mit wenigstens einer abgeknickten Lasche aufweist und durch Zusammendrücken mit der Lasche voran durch eine Abzweigöffnung des Hauptrohres in dieses teilweise einschiebbar ist, und wobei eine äußere Anlagefläche der Lasche in einem Verbindungszustand, in dem das Anschlusssystem mit dem Hauptrohr verbunden ist, wenigstens teilweise an die Hauptrohrinnenfläche, die an die Abzweigöffnung angrenzt und diese umgibt, kontaktiert. Das Anschlusssystem weist ferner einen Haltering und ein Dichtelement auf, wobei der Haltering und das Dichtelement im Verbindungszustand auf das Innenrohr aufgeschoben sind und wobei das Dichtelement im Verbindungszustand mit einer an einer Außenfläche des Hauptrohres anliegenden Kontaktfläche die Abzweigöffnung umschließt. Das Anschlusssystem umfasst weiterhin ein Abzweigelement, das für eine Verbindung mit dem Rohr vorgesehen ist, wobei das Abzweigelement im Verbindungszustand auf das Innenrohr geschraubt ist und dabei den Haltering gegen das Dichtelement drückt.

Die Erfindung zeichnet sich dadurch aus, dass am Innenrohr Zentrierelemente ausgebildet sind, die in einem Verbindungszustand, in dem das Anschlusssystem mit dem Hauptrohr verbunden ist, wenigstens teilweise eine Hauptrohr-Abzweigöffnungsfläche kontaktieren.

Durch das Kontaktieren einer Hauptrohr-Abzweigöffnungsfläche durch die am Innenrohr ausgebildeten Zentrierelemente im Verbindungszustand wird sichergestellt, dass das Innenrohr in Bezug auf die Abzweigöffnung des Hauptrohres zentriert positioniert ist.
Diese Zentrierung kann sich dabei auf das Übereinstimmen der Achsen der im Idealfall runden Abzweigöffnung im Hauptrohr und des Innenrohres beziehen.
Die zentrierte Positionierung kann sich aber auch darauf beziehen, dass das Innenrohr in etwa einen überall gleichgroßen Abstand von der Hauptrohr-Abzweigöffnungsfläche in der Abzweigöffnung des Hauptrohres aufweist.

Als Hauptrohr-Abzweigöffnungsfläche ist im Erfindungszusammenhang die Fläche zu verstehen, die beim Herstellen der Abzweigöffnung im Hauptrohr in dessen Wandung entsteht. Sie ist etwa parallel zur und Außenfläche des Innenrohres orientiert.

Bei der Komplettierung des Anschlusssystems mit dem auf diese Weise zentrierten Innenrohr durch entsprechende Montage der vorgenannten Teile ist sichergestellt, dass eingeleitete Scherlasten das Innenrohr in Bezug auf die Abzweigöffnung des Hauptrohres nicht verlagern können, so dass es zu keiner Undichtigkeit bedingt durch verschobene Dichtungen kommen kann.

Es hat sich im Rahmen der vorliegenden Erfindung als günstig erwiesen, wenn die Zentrierelemente an der Außenfläche des Innenrohres ausgebildet sind und sich bis zur Lasche erstrecken.

Durch die vorgenannte Maßnahme kann sichergestellt werden, dass die Zentrierung des Innenrohres in der Abzweigöffnung des Hauptrohres in sicherer Weise erreicht wird, wobei die Zentrierung insbesondere dann in sicherer Weise erfolgt, wenn die Lasche bei der Montage des Anschlusssystems mit ihrer äußeren Anlagefläche im Verbindungszustand wenigstens teilweise eine Hauptrohrinnenfläche kontaktiert.

Als sehr vorteilhaft hat sich erwiesen, wenn die Zentrierelemente einstückig mit dem Innenrohr ausgebildet sind.

Es ist hierdurch in einfacher Weise möglich, die Zentrierelemente am Innenrohr auszubilden, indem dies bereits beim Urformen des Innenrohres, was beispielsweise in einem Spritzgussprozess von statten geht, erfolgt.

Die Zentrierelemente sind damit fest mit dem Innenrohr verbunden. Ein Prozess, bei dem die Zentrierelemente einstückig mit dem Innenrohr ausgebildet sind, ist damit einfach, sicher, reproduzierbar und kostengünstig durchführbar.

In ganz bevorzugter Weise wird dazu ein Innenrohr aus Polymermaterial bereitgestellt, welches in einem Spritzgussprozess herstellbar ist, wobei durch Vorsehen entsprechender Kavitäten in der Spritzgussform die Zentrierelemente am Innenrohr anformbar sind.

Als sehr günstig hat sich dabei herausgestellt, wenn die Zentrierelemente als Stege oder als Wülste oder als Erhebungen ausgebildet sind.
Derartige Stege oder Wülste oder Erhebungen sind ganz besonders gut dazu geeignet, die Zentrierung des Innenrohres in der Abzweigöffnung des Hauptrohres sicherzustellen.

Im Rahmen der vorliegenden Erfindung hat sich als vorteilhaft erwiesen, wenn die Zentrierelemente in axialer Richtung einen etwa rechteckigen Querschnitt oder einen etwa trapezförmigen Querschnitt oder einen etwa dreieckigen Querschnitt oder einen etwa halbkreisförmigen Querschnitt oder einen etwa halbelliptischen Querschnitt oder einen aus den vorgenannten gebildeten Querschnitt aufweisen.

Im vorliegenden Erfindungszusammenhang ist die genannte axiale Richtung die Richtung, in der die Achse des Innenrohres verläuft.

Zentrierelemente mit den vorgenannten Querschnitten eignen sich sehr gut für die Zentrierung des Innenrohres in der Abzweigöffnung des Hauptrohres, da durch Vorsehen dieser Maßnahme das Innenrohr sehr leicht in die Abzweigöffnung eingeschoben werden kann und dabei dennoch mit großer Sicherheit zentriert ist.

Die Zentrierelemente sind weiterhin durch die genannte Maßnahme derart stabil ausgebildet, dass sie eingeleiteten Scherlasten widerstehen können.

Sehr günstig sind abgerundete Kanten, die an den Zentrierelementen ausgebildet sind. Diese erleichtern das Einschieben des Innenrohres in die Abzweigöffnung des Hauptrohres.

Als praktikabel hat sich weiterhin erwiesen, wenn die Zentrierelemente in axialer Richtung eine konische Form aufweisen, wobei die radiale Erstreckung in Richtung der Lasche zunimmt.
Mit dieser Maßnahme wird sichergestellt, dass gerade im Bereich der Lasche, also in dem Bereich der Abzweigöffnung des Hauptrohres, der dem Lumen des Hauptrohres am nächsten liegt, die Zentrierung erfolgt, um dort sicherzustellen, dass die Lasche, deren äußere Anlagefläche in einem Verbindungszustand, in dem das Anschlusssystem mit dem Hauptrohr verbunden ist, dann wenigstens teilweise eine Hauptrohr-Innenfläche kontaktiert.

Auf diese Weise ist in hohem Maße sichergestellt, dass es zu keinem Verschieben des Innenrohres in der Abzweigöffnung des Hauptrohres kommen kann, bzw. dass dieses minimiert ist.

Die radiale Erstreckung ("Höhe") der Zentrierelemente kann vorzugsweise etwa den Außendurchmesser des Gewindes am Innenrohr aufweisen.

Die Zentrierelemente weisen vorzugsweise eine Breite auf, die das 0,8- bis 4-fache der Höhe beträgt.

Im Rahmen der vorliegenden Erfindung hat sich als sehr günstig erwiesen, wenn am Innenrohr 3 bis 20, bevorzugt 4 bis 10 und ganz besonders bevorzugt 6 bis 8 Zentrierelemente angeordnet sind.

Durch das Anordnen der Zentrierelemente in der genannten Anzahl am Innenrohr erfolgt eine gleichmäßige Zentrierung des Innenrohres in der Abzweigöffnung des Hauptrohres, wobei etwaige eingeleitete Scherkräfte dann gleichmäßig an die Hauptrohr- Abzweigöffnungsfläche des Hauptrohres weitergeleitet werden.

Als sehr günstig hat sich dabei erwiesen, wenn die Zentrierelemente an der Außenfläche des Innenrohres etwa gleich beabstandet angeordnet sind.
Die etwa gleich beabstandeten Zentrierelemente an der Außenfläche des Innenrohres ermöglichen eine lageunabhängige gleichmäßige Zentrierung des Innenrohres in der Abzweigöffnung des Hauptrohres.

Die Zentrierelemente können in einer weiteren Ausführungsform der Erfindung in gleicher Form ausgebildet oder in zwei Grundformen ausgebildet sein, die sich entlang des Umfangs jeweils abwechseln.
Die Erfindung umfasst auch ein Innenrohr für ein Anschlusssystem zum Anschließen eines Rohres an ein Hauptrohr, wobei das Anschlusssystem zu diesem Zweck mit dem Hauptrohr verbindbar ist. Hierzu ist ein elastisch verformbares Innenrohr vorgesehen, wobei das Innenrohr einen Endabschnitt mit wenigstens einer abgeknickten Lasche aufweist und durch Zusammendrücken mit der Lasche voran durch eine Abzweigöffnung des Hauptrohres in dieses teilweise einschiebbar ist, und wobei eine äußere Anlagefläche der Lasche in einem Verbindungszustand, in dem das Anschlusssystem mit dem Hauptrohr verbunden ist, wenigstens teilweise eine Hauptrohr-Innenfläche, die an die Abzweigöffnung angrenzt und diese umgibt, kontaktiert.
Weiterhin sind ein Haltering und ein Dichtelement vorgesehen, wobei der Haltering und das Dichtelement im Verbindungszustand auf das Innenrohr aufgeschoben sind, und wobei das Dichtelement im Verbindungszustand mit einer an einer Außenfläche des Hauptrohres anliegenden Kontaktfläche die Abzweigöffnung umschließt, und ein Abzweigelement, das für eine Verbindung mit dem Rohr vorgesehen ist, wobei das Abzweigelement im Verbindungszustand auf das Innenrohr geschraubt ist und dabei den Haltering gegen das Dichtelement drückt.
Das Innenrohr zeichnet sich dadurch aus, dass Zentrierelemente ausgebildet sind, die in einem Verbindungszustand, in dem das Anschlusssystem mit dem Hauptrohr verbunden ist, wenigstens teilweise eine Hauptrohr-Abzweigöffnungsfläche kontaktieren.

Anstelle von Zentrierelementen kann vorgesehen sein, dass um den Umfang des Innenrohres an dessen Außenfläche umlaufend ein Ring oder ein Absatz oder ein Steg oder eine Leiste oder eine Umfangsverdickung ausgebildet ist, die im Verbindungszustand, in dem das Anschlusssystem mit dem Hauptrohr verbunden ist, wenigstens teilweise eine Hauptrohr-Abzweigöffnungsfläche kontaktieren.
Mit dieser Maßnahme kann auch ein zentriertes Positionieren des Innenrohres in der Abzweigöffnung des Hauptrohres erzielt werden.

Die Aufgabe, ein Fluidleitsystem anzugeben, erfährt ihre Lösung in Anspruch 10.

Erfindungsgemäß wird ein Fluidleitsystem mit wenigstens einem Anschlusssystem der vorgenannten Art zum Anschließen eines Rohres an ein Hauptrohr bereitgestellt.

Anwendung findet das Anschlusssystem bei Hauptrohren, an die Rohre anzuschließen sind, wobei ein hohes Maß an Dichtheit zu gewährleisten ist.
Insbesondere findet die Erfindung Anwendung bei Abwasserrohren, wo zu vermeiden ist, dass darin geleitete Flüssigkeit durch Undichtigkeiten an Anschlüssen in den Boden gelangt und diesen verunreinigt.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Fig. dargestellt und werden in der nachfolgenden Beschreibung näher erläutert.

Die Erfindung wird anhand der beigefügten Figuren näher erläutert.

Hierzu zeigt die
- Fig. 1: eine Schnittdarstellung des Anschlusssystems gemäß vorliegender Erfindung;
- Fig. 2: eine perspektivische Ansicht des Innenrohres des Anschlusssystems.

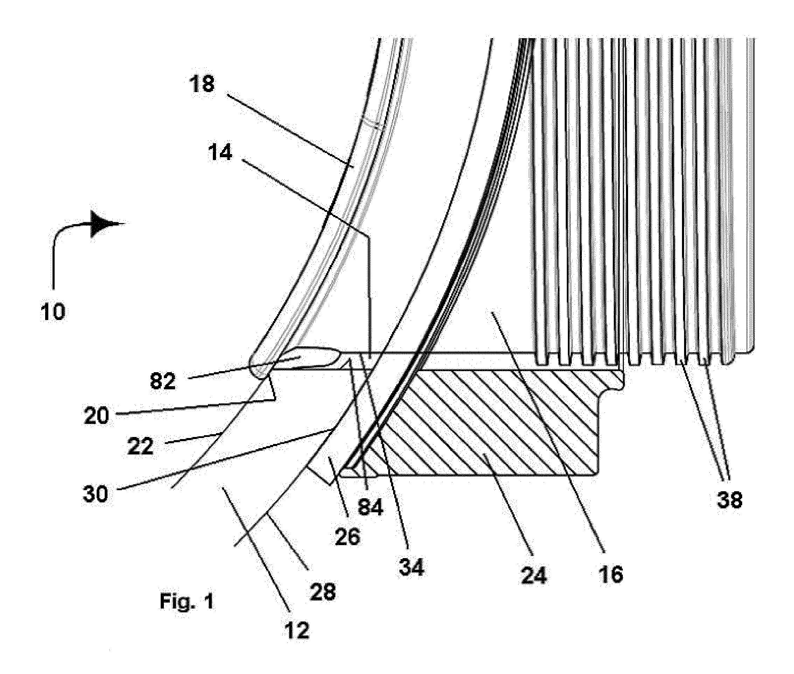

Das in Fig. 1 geschnitten dargestellte Anschlusssystem 10 ist im Verbindungszustand dargestellt, also in dem Zustand, in dem das Anschlusssystem 10 mit einem nur teilweise dargestellten Hauptrohr 12, das eine Abzweigöffnung 14 aufweist, verbunden ist.
Das Anschlusssystem 10 weist ein elastisch verformbares Innenrohr 16 auf, wobei das Innenrohr 16 einen Endabschnitt mit wenigstens einer abgeknickten Lasche 18, die umlaufend ausgebildet ist, aufweist, wobei das Innenrohr 16 zuvor durch Zusammendrücken mit der Lasche 18 voran durch die Abzweigöffnung 14 des Hauptrohres 12 in dieses teilweise eingeschoben worden ist.
Eine äußere Anlagefläche 20 der Lasche 18 kontaktiert eine Hauptrohr-Innenfläche 22, die an die Abzweigöffnung 14 angrenzt und diese umgibt.

Das Anschlusssystem 10 weist ferner einen Haltering 24 und ein Dichtelement 26 auf, wobei der Haltering 24 und das Dichtelement 26 auf das Innenrohr 16 aufgeschoben sind, und wobei das Dichtelement 26 mit einer an einer Außenfläche 28 des Hauptrohres 12 anliegenden Kontaktfläche 30 die Abzweigöffnung 14 umschließt.

Ein hier nicht dargestelltes Abzweigelement des Anschlusssystems 10, das für eine Verbindung mit dem jeweils anzuschließen Rohr vorgesehen ist, ist über ein an einer Außenfläche 34 des Innenrohres 16 ausgebildetes Gewinde 38 auf das Innenrohr 16 geschraubt und drückt dabei den Haltering 24 gegen das Dichtelement 26, wobei die Anlagefläche 20 der Lasche 18 als Gegenlager bzw. Widerlager dient und gegen die Hauptrohr-Innenfläche 22 gedrückt ist.

Am Innenrohr 16 sind Zentrierelemente 82 ausgebildet, die in einem Verbindungszustand, in dem das Anschlusssystem 10 mit dem Hauptrohr 12 verbunden ist, wenigstens teilweise eine Hauptrohr-Abzweigöffnungsfläche 84 kontaktieren.
Die Zentrierelemente 82 sind an der Außenfläche 34 des Innenrohres 16 ausgebildet und erstrecken sich bis zur Lasche 18.
Die Zentrierelemente 82 sind einstückig mit dem Innenrohr 16 ausgebildet.
Sie sind in einfacher Weise beim Urformen des Innenrohres 16 ausbildbar.
Die Zentrierelemente 82 sind als Wülste geformt, die einen etwa halbelliptischen Querschnitt aufweisen.
Sie weisen in axialer Richtung eine konische Form auf, wobei die radiale Erstreckung in Richtung der Lasche 18 zunimmt.
Die Zentrierelemente 82 kontaktieren im Verbindungszustand, in dem das Anschlusssystem 10 mit dem Hauptrohr 12 verbunden ist, wenigstens teilweise eine Hauptrohr-Abzweigöffnungsfläche 84.
Dadurch ist das Innenrohr 16 in der Abzweigöffnung 14 des Hauptrohres 12 zentriert positioniert.
Die radiale Erstreckung ("Höhe") der Zentrierelemente 82 weist etwa den Außendurchmesser des Gewindes 38 am Innenrohr 16 auf.

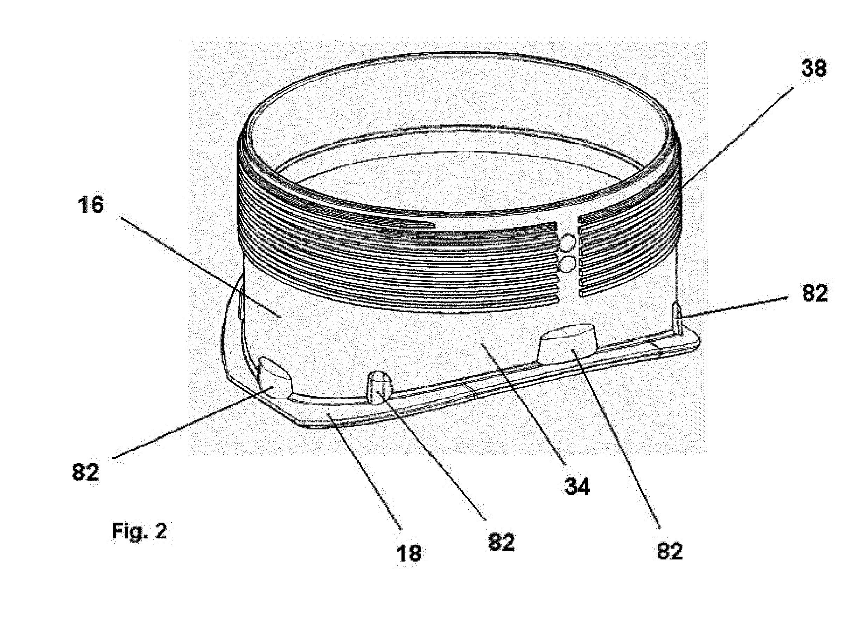

Die Fig. 2 zeigt eine perspektivische Ansicht des Innenrohres 16 des Anschlusssystems 10. An der Außenfläche 34 des Innenrohres 16 sind Zentrierelemente 82 ausgebildet.
Diese erstrecken sich bis zur Lasche 18.
Die Zentrierelemente 82 sind einstückig mit dem Innenrohr 16 ausgebildet.
Die Zentrierelemente 82 sind als Wülste geformt, die einen etwa halbelliptischen Querschnitt aufweisen.
Sie weisen in axialer Richtung eine konische Form auf, wobei die radiale Erstreckung in Richtung der Lasche 18 zunimmt.
Im dargestellten Ausführungsbeispiel der Erfindung sind an dem Innenrohr 16 insgesamt 8 Zentrierelemente 82 angeordnet, wobei diese in zwei Grundformen ausgebildet sind, die sich entlang des Umfangs jeweils abwechseln.
Hierzu ist eine schmale und eine breite Grundform der Zentrierelemente 82 ausgebildet, die alternierend angeordnet sind.

### Bezugszeichenliste

- 10: Anschlusssystem
- 12: Hauptrohr
- 14: Abzweigöffnung
- 16: Innenrohr
- 18: Lasche
- 20: Anlagefläche Lasche
- 22: Hauptrohr-Innenfläche
- 24: Haltering
- 26: Dichtelement
- 28: Außenfläche Hauptrohr
- 30: Kontaktfläche
- 34: Außenfläche Innenrohr
- 38: Gewinde Innenrohr
- 82: Zentrierelement
- 84: Hauptrohr-Abzweigöffnungsfläche

## Patentansprüche

1. Anschlusssystem (10) zum Anschließen eines Rohres an ein Hauptrohr (12), wobei das Anschlusssystem (10) zu diesem Zweck mit dem Hauptrohr (12) verbindbar ist, mit einem elastisch verformbaren Innenrohr (16), wobei das Innenrohr (16) einen Endabschnitt mit wenigstens einer abgeknickten Lasche (18) aufweist und durch Zusammendrücken mit der Lasche (18) voran durch eine Abzweigöffnung (14) des Hauptrohres (12) in dieses teilweise einschiebbar ist, und wobei eine äußere Anlagefläche (20) der Lasche in einem Verbindungszustand, in dem das Anschlusssystem (10) mit dem Hauptrohr (12) verbunden ist, wenigstens teilweise eine Hauptrohr-Innenfläche (22), die an die Abzweigöffnung (14) angrenzt und diese umgibt, kontaktiert, einem Haltering (24) und einem Dichtelement (26), wobei der Haltering (24) und das Dichtelement (26) im Verbindungszustand auf das Innenrohr (16) aufgeschoben sind, und wobei das Dichtelement (26) im Verbindungszustand mit einer an einer Außenfläche (28) des Hauptrohres (12) anliegenden Kontaktfläche (30) die Abzweigöffnung (14) umschließt, einem Abzweigelement, das für eine Verbindung mit dem Rohr vorgesehen ist, wobei das Abzweigelement im Verbindungszustand auf das Innenrohr (16) geschraubt ist und dabei den Haltering (24) gegen das Dichtelement (26) drückt, **dadurch gekennzeichnet, dass** am Innenrohr (16) Zentrierelemente (82) ausgebildet sind, die in einem Verbindungszustand, in dem das Anschlusssystem (10) mit dem Hauptrohr (12) verbunden ist, wenigstens teilweise eine Hauptrohr-Abzweigöffnungsfläche (84) kontaktieren.

2. Anschlusssystem (10) zum Anschließen eines Rohres an ein Hauptrohr (12) nach Anspruch 1, **dadurch gekennzeichnet, dass** die Zentrierelemente (82) an der Außenfläche (34) des Innenrohres (16) ausgebildet sind und sich bis zur Lasche (18) erstrecken.

3. Anschlusssystem (10) zum Anschließen eines Rohres an ein Hauptrohr (12) nach Anspruch 1 oder 2, **dadurch gekennzeichnet, dass** die Zentrierelemente (82) einstückig mit dem Innenrohr (16) ausgebildet sind.

4. Anschlusssystem (10) zum Anschließen eines Rohres an ein Hauptrohr (12) nach einem der vorangehenden Ansprüche, **dadurch gekennzeichnet, dass** die Zentrierelemente (82) beim Urformen des Innenrohres (16) ausgebildet sind.

5. Anschlusssystem (10) zum Anschließen eines Rohres an ein Hauptrohr (12) nach einem der vorangehenden Ansprüche, **dadurch gekennzeichnet, dass** die Zentrierelemente (82) als Stege oder als Wülste oder als Erhebungen ausgebildet sind.

6. Anschlusssystem (10) zum Anschließen eines Rohres an ein Hauptrohr (12) nach einem der vorangehenden Ansprüche, **dadurch gekennzeichnet, dass** die Zentrierelemente (82) in axialer Richtung einem etwa rechteckigen Querschnitt oder einen etwa trapezförmigen Querschnitt oder einen etwa dreieckigen Querschnitt oder einen etwa halbkreisförmigen Querschnitt oder einen etwa halbelliptischen Querschnitt oder einen aus den vorgenannten gebildeten Querschnitt aufweisen.

7. Anschlusssystem (10) zum Anschließen eines Rohres an ein Hauptrohr (12) nach einem der vorangehenden Ansprüche, **dadurch gekennzeichnet, dass** die Zentrierelemente (82) in axialer Richtung eine konische Form aufweisen, wobei die radiale Erstreckung in Richtung der Lasche (18) zunimmt.

8. Anschlusssystem (10) zum Anschließen eines Rohres an ein Hauptrohr (12) nach einem der vorangehenden Ansprüche, **dadurch gekennzeichnet, dass** am Innenrohr (16) 3 bis 20, bevorzugt 4 bis 10, ganz besonders bevorzugt 6 bis 8 Zentrierelemente (82) angeordnet sind.

9. Anschlusssystem (10) zum Anschließen eines Rohres an ein Hauptrohr (12) nach einem der vorangehenden Ansprüche, **dadurch gekennzeichnet, dass** die Zentrierelemente (82) an der Außenfläche (34) des Innenrohres (16) etwa gleich beabstandet angeordnet sind.

10. Fluidleitsystem mit wenigstens einem Anschlusssystem (10) zum Anschließen eines Rohres an ein Hauptrohr (12) nach einem der Ansprüche 1 bis 9.
